# EUROPÄISCHE PATENTANMELDUNG

(11) **EP 3 392 502 A1**
(43) Veröffentlichungstag der Anmeldung: **24.10.2018**
(21) Anmeldenummer: 17167180.3
(22) Anmeldetag: 20.04.2017
(51) Int. Cl.: F03D 13/20, E04H 12/08, F03D 80/00

(54) **TURM EINER WINDENERGIEANLAGE UND VERFAHREN ZUM BAU EINES TURMS EINER WINDENERGIEANLAGE**

(71) Anmelder: Nordex Energy GmbH, 22419 Hamburg (DE)
(72) Erfinder: Derksen, Juri, 32427 Minden (DE)
(74) Vertreter: Garrels, Sabine

(57) **Zusammenfassung**

Die Erfindung betrifft einen Turm einer Windenergieanlage, welcher in seiner vertikalen Achse eine Mehrzahl von Turmsektionen mit einem polygonalen oder runden Querschnitt aufweist, wobei wenigstens zwei Turmsektionen jeweils eine Mehrzahl von Sektionssegmenten umfassen, die an ihren parallel zur vertikalen Turmachse verlaufenden Längsseiten Längsflansche aufweisen, die durch Verbindungselemente miteinander verbunden sind, wobei die Sektionssegmente innenseitig an ihren oberen und unteren Endabschnitten Verbindungswinkel aufweisen, welche in ihrer Längserstreckung parallel zur vertikalen Turmachse ausgerichtet sind.

## Beschreibung

Die Erfindung betrifft die Konstruktion von Türmen für Windenergieanlagen (WEA). Es handelt sich bei der Erfindung um einen Turm einer Windenergieanlage und ein Verfahren zum Bau eines Turms bestehend aus einzelnen Sektionen, die eine Mehrzahl von Sektionssegmenten aufweisen.

Um größere Erträge zu erwirtschaften, werden immer höhere Tragstrukturen der Windenergieanlagen benötigt. Um die strukturelle Integrität der Windenergieanlagen nicht zu gefährden, ist auch eine Vergrößerung der Durchmesser der Tragstrukturen notwendig. Tragstrukturen für Windenergieanlagen werden dabei unterschieden nach Gittermasttürmen, Betontürmen und Stahlrohrtürmen. "Geschlossene" Tragstrukturen wie Betontürme und Stahlrohrtürme haben einige Vorteile gegenüber Gittermasttürmen und werden deswegen häufig eingesetzt. Stahlrohrtürme zeichnen sich beispielsweise durch einen größeren Vormontageanteil aus. Aufgrund der vorhandenen Logistikprobleme beim Transport der einzelnen Elemente der Windenergieanlagen sind die Durchmesser und Längen der zu transportierenden Teile begrenzt. Aus diesem Grund werden einzelne Segmente und Sektionen der Tragstrukturen am Errichtungsort zusammengebaut. Die entsprechenden Segmente werden mit Hilfe von Verbindungselementen miteinander verbunden. Als Verbindungselemente dienen üblicherweise Schraubgarnituren, bestehend aus Schraube, Mutter und Unterlegscheiben.

Aus Kosten- und Wartungsgründen sind zunehmend einseitige Montagemethoden gewünscht, wobei dabei ein Herstellen der Verbindung an der Innenseite der geschlossenen Tragstrukturen bevorzugt wird. Hierfür können klassische Schraubverbindung mit aufgeschweißter Mutter am Außenteil einer Turmwandung sowie Dehnschrauben und spannungskontrollierte Bolzen mit einer in die Außenwand eingepressten oder angeschweißten Mutter verwendet werden. Jedoch erfüllen alle diese Verbindungen nicht den Wunsch nach Wartungsfreiheit. Eine solche könnte z.B. mit Nieten erreicht werden, jedoch sind Nietverbindungen nur mit Werkzeugen beidseitig der Turmwandung herstellbar.

Der Stand der Technik offenbart verschiedene Möglichkeiten für ein einseitiges Verbinden von Turmsegmenten. Beispielsweise wird in der WO 2012/007000 A1 vorgeschlagen, in die Außenseiten der Turmsegmente nicht lösbar eingesetzte oder angeschweißte Gewindebuchsen vorzusehen, nachfolgend werden von der Innenseite Schrauben eingesetzt und festgezogen. Die EP 2 006 471 B1 schlägt an den oberen und unteren Enden der Turmsegmente vormontierte Flanschsegmente vor, die im Zuge der Montage miteinander verschraubt werden.

Des Weiteren sind aus dem Stand der Technik Lösungen, bei denen Segmentplatten der Turmwandung einander überlappen, beispielsweise bekannt aus der WO 2009/097858 A1 oder der EP 2 402 605 A1, wobei die überlappenden Abschnitte der Segmentplatten durch Schraubverbindungen umlaufend miteinander verbunden sind.

Lösungen, bei denen zum Verbinden von Turmsektionen und/oder Sektionssegmenten Stahlblechlaschen verwendet werden, sind aus den Veröffentlichungen EP 1 889 987 A1, US 2011/0138729 A1 und WO 2007/095940 A1 bekannt. In der EP 1 889 987 A1 sind beidseitig der Turmwandung Stahlblechlaschen zum vertikalen Verbinden von Turmsektionen offenbart. Die US 2011/0138729 A1 zeigt verschiedene Laschenverbindungen jeweils bestehend aus vertikalen Flanschen, die innen auf vertikal angrenzende Sektionssegmente angeschweißt sind, und zwei Stahlblechlaschen, wobei eine Stahlblechlasche links der Flansche und eine Stahlblechlasche rechts der Flansche angesetzt und verschraubt wird. Dagegen offenbart die Offenlegungsschrift WO 2007/095940 A1 wiederum Stahlblechlaschen zum vertikalen Verbinden von Turmsektionen und/oder Sektionssegmenten, die einseitig oder beidseitig der Turmwandung vorgesehen sind, wobei dort unterschiedliche Blechstärken der Sektionssegmente durch Unterlegbleche ausgeglichen werden.

Ausgehend von dem zuvor beschriebenen Stand der Technik ist es Aufgabe der Erfindung, eine Verbindung von Sektionssegmenten für geschlossene Tragstrukturen, insbesondere Turmsektionen, bereitzustellen, welche eine allein innenseitige Montage erlaubt und zudem wartungsfrei ist.

Die Aufgabe wird gelöst durch einen Turm einer Windenergieanlage, welcher in seiner vertikalen Achse eine Mehrzahl von Turmsektionen mit einem polygonalen oder runden Querschnitt aufweist, wobei wenigstens zwei Turmsektionen jeweils eine Mehrzahl von Sektionssegmenten umfassen, die an ihren im Wesentlichen vertikal verlaufenden Längsseiten durch Verbindungselemente miteinander verbunden sind, wobei die Sektionssegmente an ihren innenseitigen oberen und unteren Endabschnitten Verbindungswinkel aufweisen, welche mit beiden Schenkeln in ihrer Längserstreckung parallel zur vertikalen Turmachse ausgerichtet sind.

Vorteilhafterweise weist der Turm wenigstens drei Turmfußsegmente auf, wobei jedes Turmfußsegment mit wenigstens einem zugeordneten Sektionssegment verbindbar ist und jedes Turmfußsegment Verbindungswinkel aufweist, welche mit beiden Schenkeln in ihrer Längserstreckung im Wesentlichen parallel zur vertikalen Turmachse ausgerichtet sind und vorzugsweise über den oberen Rand des Turmfußsegments hinausragen.

Bevorzugt ragen die Verbindungswinkel an einem Endabschnitt, vorzugsweise dem oberen Endabschnitt, über den Rand des Sektionssegments hinaus.

In einer bevorzugten Weiterbildung weisen die Verbindungswinkel einen eingeschlossenen Winkel von mehr als 90 Grad, vorzugsweise von 120 bis 150 Grad, besonders bevorzugt von 135 Grad auf. Anders ausgedrückt, schließen die Schenkel der Verbindungswinkel einen Winkel von etwa 90 Grad bis etwa150 Grad ein, um eine gute Zugänglichkeit für ein Einsetzen von Verbindungsmitteln sicherzustellen und hinreichend Raum für zugehöriges Werkzeug bereitzustellen.

Vorteilhafterweise sind die Verbindungswinkel eines Sektionssegments nicht lösbar mit diesem verbunden, wobei ein Schenkel jedes Verbindungswinkels an der Innenseite der Segmentwandung anliegt und wobei der andere Schenkel in einem Winkel von der Segmentwandung weg zeigt. Unter "nicht lösbar" ist im Sinne der Erfindung "nicht zerstörungsfrei lösbar" zu verstehen. Als Verbindungsmittel können beispielsweise Niete vorgesehen sein. In einer besonders bevorzugten Ausgestaltung der Erfindung sind als Verbindungselemente Schließringbolzen vorgesehen. Schließringbolzen erlauben ein schnelles Verbinden der Verbindungswinkel mit der Segmentwandung und bilden eine dauerhafte mechanische Verbindung. Es treten keine Materialspannungen und/oder Verformungen durch Wärmeeintrag wie beim Schweißen auf. Es ist kein Anziehen oder Nachziehen wie bei konventionellen Schrauben und Muttern erforderlich. Ferner ist ein Lockern wie bei konventionellen Schrauben und Muttern selbst bei extremer Vibration ausgeschlossen. Unter Inkaufnahme dieser Nachteile ist im Rahmen der Erfindung auch ein Verbinden mit Schrauben und selbstsichernden Muttern oder entsprechenden Schraubengarnituren möglich.

In einer besonders bevorzugten Ausgestaltung der Erfindung überlappen sich die übereinander angeordneten Sektionssegmente an ihren Endabschnitten in einem schmalen, bohrungsfreien Randabschnitt derart, dass der untere Endabschnitt des oberen Sektionssegments den Randbereich des oberen Endabschnitts des unteren Sektionssegments überdeckt. Somit ist auf einfache Weise ein Schutz gegen in das Innere des Turms eindringendes Regenwasser geschaffen, sodass der Aufwand für zusätzliche Dichtungen gering gehalten werden kann.

Für den Fall, dass insbesondere von der unteren Turmsektion eine größere Masse aufzunehmen ist, kann alternativ vorgesehen sein, dass übereinander angeordnete Sektionssegmente stirnseitig überlappungsfrei aneinander stoßen, so dass die Kraft direkt in die Wandung eingeleitet wird.

Die Aufgabe wird auch gelöst durch ein Verfahren zum Bau eines Turms einer Windenergieanlage, welcher in seiner vertikalen Achse eine Anzahl von Turmsektionen mit einem runden oder polygonalen Querschnitt umfasst, wobei jede Turmsektion aus einer Mehrzahl von Sektionssegmenten mit einem einer Gondel abgewandten unteren Endabschnitt und einem der Gondel zugewandten oberen Endabschnitt besteht, umfassend Längsflansche an den Längsseiten der Sektionssegmente, welche durch Verbindungselemente, insbesondere Schließringbolzen zu einer ersten Turmsektion verbunden werden, wobei jeweils zwei übereinander angeordnete Sektionssegmente zusammengefügt werden, indem das obere Sektionssegment in einem schmalen Überlappungsbereich über das untere Sektionssegment gestülpt wird, so dass Verbindungswinkel im oberen Endabschnitt des unteren Sektionssegments mit Verbindungswinkeln im unteren Endabschnitt des oberen Sektionssegments derart positioniert werden, dass Durchgangsbohrungen in den freien Schenkeln der oberen Verbindungswinkel und Durchgangsbohrungen in den freien Schenkeln der unteren Verbindungswinkel im Wesentlichen deckungsgleich übereinander liegen und anschließend Verbindungselemente, insbesondere Schließringbolzen eingebracht und verpresst werden, um beide Sektionssegmente miteinander zu verbinden.

Bevorzugt werden zuvor mehrere Turmfußsegmente mit dem Fundament verbunden und anschließend jedes Turmfußsegment auf die beschriebene Weise mit wenigstens einem zugeordneten Sektionssegment verbunden.

In einer Weiterbildung werden in einem nachfolgenden Schritt weitere Sektionssegmente einer weiteren Ebene zu einer weiteren Turmsektion zusammengefügt, wobei in die voneinander beabstandeten, im Wesentlichen übereinanderliegenden Bohrungen der benachbarten Längsflansche an den Längsseiten der Sektionssegmente Verbindungselemente eingebracht und gegebenenfalls verpresst werden.

Der erfindungsgemäße Turm für eine Windenergieanlage und das Verfahren zu dessen Errichtung weisen eine Vielzahl von Vorteilen auf. Zunächst können die Sektionssegmente im Werk vorgefertigt werden, das heißt unter anderem, dass die Verbindungswinkel bereits montiert und dass die Sektionssegmente bereits oberflächenbehandelt werden können. Die erfindungsgemäß verwendeten Schließringbolzen erlauben eine relativ große Toleranz hinsichtlich der Durchmesser und Position der Durchgangsbohrungen. Die erfindungsgemäß verwendeten Schließringbolzen erlauben insbesondere ein schnelles Setzen, Fixieren und Verpressen aus dem Inneren des im Aufbau befindlichen Turms heraus. Es wird ferner nur eine Art von Verbindungsmitteln und Werkzeugen benötigt. Die auch am Errichtungsort sicher handhabbare Verbindungtechnik ist zudem wartungsfrei, so dass ein Nachziehen der Verbindungen entfällt, wobei lediglich eine einfache manuelle und/oder visuelle Kontrolle der gesetzten Verbindungen erforderlich ist. Ein "Durchdrehen" von Muttern, wie bei Schraubverbindungen, ist prinzipiell ausgeschlossen. Schließlich ist der Aufwand für Einzelteile minimiert, da Laschen, Unterlegscheiben und Muttern nicht benötigt werden.

Die technische Lösung und das Zusammenwirken der Einzelkomponenten werden anhand eines Ausführungsbeispiels gezeigt. Dabei zeigen
- Fig. 1:: eine Windenergieanlage mit einem Turm gemäß der Erfindung,
- Fig. 2:: einen Turm einer Windenergieanlage gemäß der Erfindung,
- Fig. 3a:: eine perspektivische Außenansicht eines Sektionssegments
- Fig. 3b:: eine perspektivische Innenansicht eines Sektionssegments
- Fig. 4a:: eine vergrößerte Darstellung des oberen Endabschnitts eines Sektionssegments aus Fig. 3b,
- Fig. 4b:: eine vergrößerte Darstellung des unteren Endabschnitts eines Sektionssegments aus Fig. 3b,
- Fig. 5a:: eine perspektivische Innenansicht einer erfindungsgemäßen Verbindung eines Sektionssegments mit einem Turmfußsegment,
- Fig. 5b:: eine perspektivische Außenansicht einer erfindungsgemäßen Verbindung eines Sektionssegments mit einem Turmfußsegment und
- Fig. 6:: eine Schnittdarstellung einer Schließringbolzenverbindung

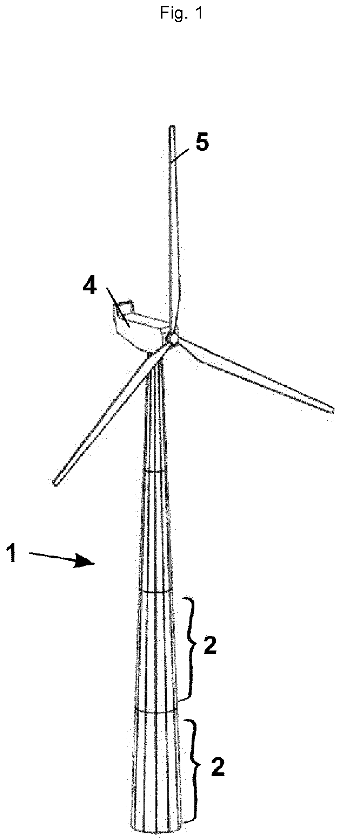

Eine erfindungsgemäße Windenergieanlage mit einem Turm 1 wird in Fig. 1 gezeigt. Der Turm 1 der Windenergieanlage ist in seiner Vertikalen in mehrere Turmsektionen 2 unterteilt. Auf der obersten Turmsektion 2 ist eine Gondel 4 mit einer nicht dargestellten Rotorwelle angeordnet, an der wiederum eine Rotornabe mit Rotorblättern 5 angeordnet ist.

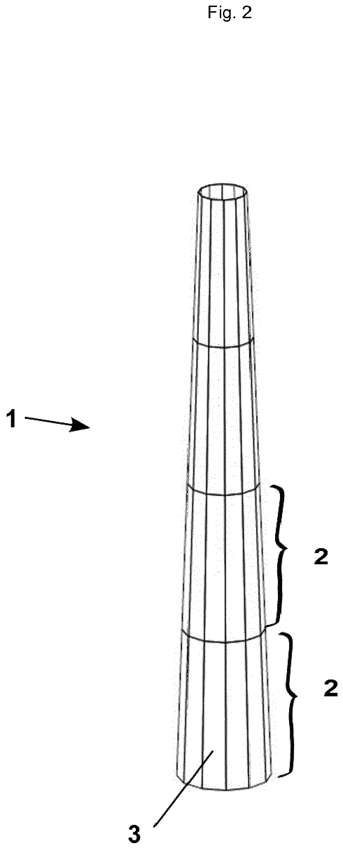

Fig. 2 zeigt den Turm 1, bei welchem die Turmsektionen 2 vollständig aus einzelnen Sektionssegmenten 3 bestehen. Im Ausführungsbeispiel ist der Turm insgesamt konisch ausgebildet, womit auch die einzelnen Turmsektionen 2 konisch ausgebildet sind. Dabei ist der Durchmesser einer oberen, dem Boden abgewandten Seite einer unteren Turmsektion 2 im Wesentlichen gleich dem Durchmesser einer unteren, dem Boden zugewandten Seite einer darüber liegenden Turmsektion 2.

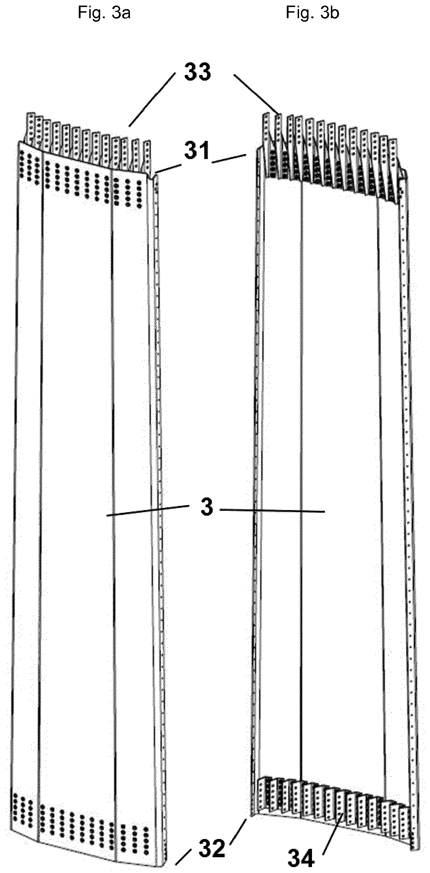

In Fig. 3a und 3b sind jeweils ein Sektionssegment 3 dargestellt, wobei in Fig. 3a die Außenseite des Sektionssegments 3 und in Fig. 3b die Innenseite des Sektionssegments 3 gezeigt ist. Die Sektionssegmente 3 sind im Ausführungsbeispiel zweimal in Längsrichtung nach innen gekantet, um diese zu einer geschlossenen polygonalen Turmsektion 2 zusammenfügen zu können. Weiterhin sind die Sektionssegmente 3 in diesem Ausführungsbeispiel durch einen kürzeren, dem Boden abgewandten oberen Endabschnitt 31 und einen längeren, dem Boden zugewandten unteren Endabschnitt 32 trapezförmig ausgebildet, um diese zu einer konischen polygonalen Turmsektion 2 zusammenfügen zu können. An dem oberen Endabschnitt 31 und an dem unteren Endabschnitt 32 sind mehrere voneinander beabstandete Bohrungen vorgesehen, an welchen obere bzw. untere Verbindungswinkel 33, 34 befestigt sind. Die Verbindungswinkel 33, 34 weisen jeweils zwei Schenkel auf, die einen Winkel von 90° bis 135° einschließen. Die oberen Verbindungswinkel 33 ragen über den oberen Endabschnitt 31 des Sektionssegments 3 hinaus. In den Schenkeln der Verbindungswinkel 33, 34 sind voneinander beabstandete Durchgangsbohrungen vorgesehen.

An den longitudinalen Seiten der Sektionssegmente 3 befinden sich Längsflansche 35, welche nach innen gerichtet sind und sich über die gesamte Länge der Sektionssegmente 3 erstrecken. Die Längsflansche 35 können an dem Sektionssegment 3 durch beispielsweise Schweißen oder Nieten befestigt sein oder die Sektionssegmente 3 sind an den longitudinalen Seiten entsprechend abgekantet. Die Längsflansche 35 weisen ebenfalls voneinander beabstandete Durchgangsbohrungen auf.

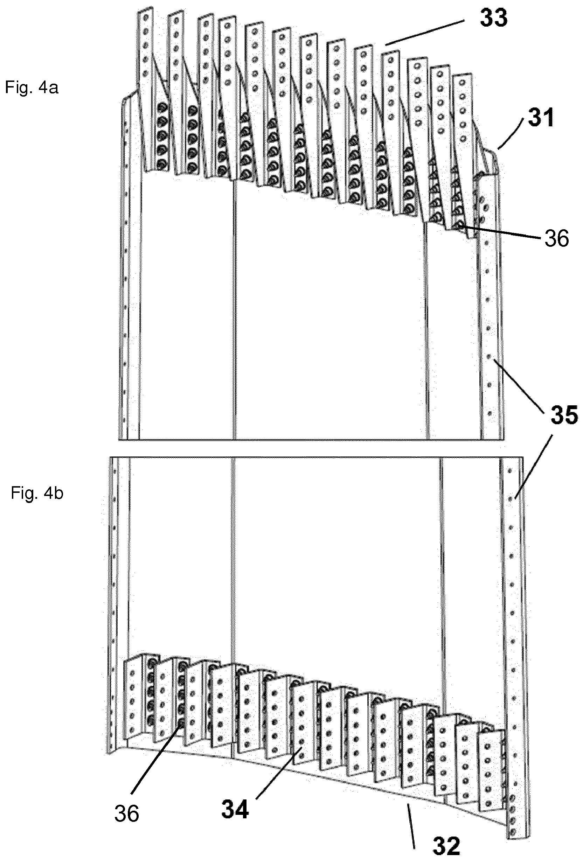

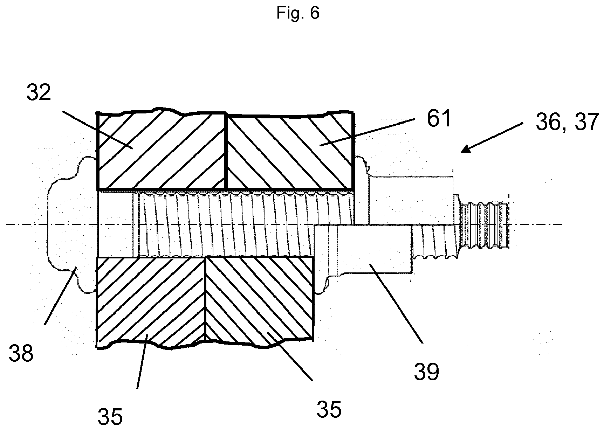

Fig. 4a und Fig. 4b zeigen die oberen bzw. unteren Verbindungswinkel 33, 34 im Detail, wobei in Fig. 4a die oberen Verbindungswinkel 33 in dem oberen Endabschnitt 31 des Sektionssegments 3 und in Fig. 4b die unteren Verbindungswinkel 34 in dem unteren Endabschnitt 32 des Sektionssegments 3 dargestellt sind. Mit jeweils einem Schenkel sind die Verbindungswinkel 33, 34 an dem Sektionssegment 3 befestigt. Dafür sind Verbindungselemente 36, wie beispielsweise Gewindebolzen, Niete, Schrauben oder Schließringbolzen 37 (vgl. Fig. 6) durch die dafür vorgesehenen Bohrungen im Sektionssegment 3 und durch die dafür vorgesehenen Bohrungen in den Verbindungswinkeln 33, 34 eingebracht. Die einander zugeordneten Bohrungen im Sektionssegment 3 und in den Verbindungswinkeln 33, 34 liegen im Wesentlichen kongruent übereinander. Als verbindungsmittelfreie Befestigungsmöglichkeit der Verbindungswinkel 33, 34 an den Sektionssegmenten 3 kann auch eine Schweißverbindung vorgesehen sein. Die freien Schenkel der oberen und unteren Verbindungswinkel 33, 34 ragen in das Innere des Turms1 hinein, wobei die Schenkel der oberen Verbindungswinkel 33 über den oberen Endabschnitt 31 des Sektionssegments 3 hinausragen.

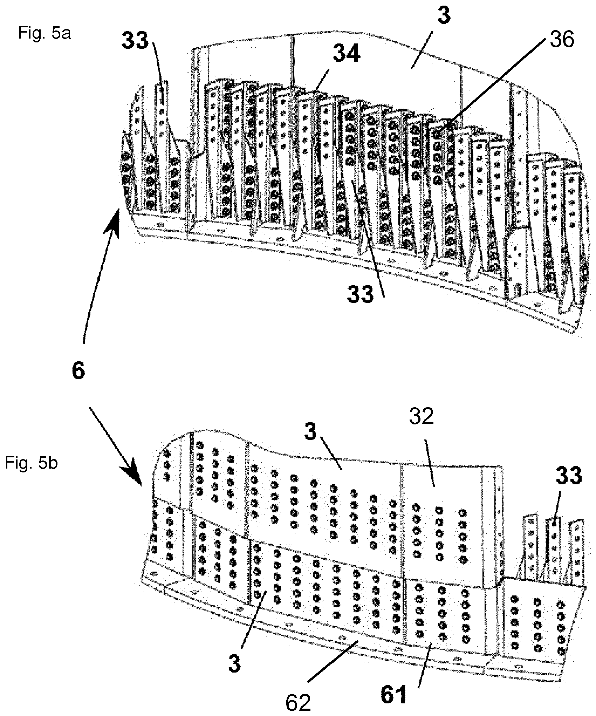

Fig. 5a und Fig. 5b zeigen jeweils eine perspektivische Ansicht einer erfindungsgemäßen Verbindung eines Sektionssegments 3 mit einem Turmfußsegment 6, wobei in Fig. 5a die Innenseite und in Fig. 5b die Außenseite der Verbindung gezeigt ist. Beim Zusammenfügen von zwei übereinander angeordneten Sektionssegmenten 3 oder von einem Sektionssegmenten 3 und einem Turmfußsegment 6 wird der untere Endabschnitt 32 des Sektionssegments 3 in einem schmalen Überlappungsbereich über den Wandabschnitt 61 des Turmfußsegments 6 gestülpt, so dass die Durchgangsbohrungen der in den Turm 1 weisenden freien Schenkel der Verbindungswinkel 33 des Turmfußsegments 6 mit den Verbindungswinkeln 34 des Sektionssegments 3 fluchtend ausgerichtet sind. In die Durchgangsbohrungen werden nachfolgend Verbindungselemente 36 eingebracht, wie beispielsweise Gewindebolzen, Niete, Schrauben oder Schließringbolzen 37 (vgl. Fig. 6), wie insbesondere die Fig. 5a erkennen lässt. Wie die Fig. 5a und die Fig. 5b weiter erkennen lassen, umfasst das Turmfußsegment 6 einen waagerechten Flanschabschnitt 62, welcher mit einem nicht dargestellten Fundament verbindbar ist.

In Fig. 6 ist eine Schließringbolzenverbindung als Schnittdarstellung für zwei Wandstärken wiedergegeben. Oberhalb der Mittellinie ist ein Ausführungsbeispiel mit größerer Wandstärke gezeigt, bei welcher durch den Schließringbolzen 37 mit einem Kopf 38 und einem Schließring 39 der untere Endabschnitt 32 eines Sektionssegments 3 mit dem Wandabschnitt 61 eines Turmfußsegments 6 verbunden ist. Unterhalb der Mittellinie ist ein Ausführungsbeispiel mit geringerer Wandstärke gezeigt, bei welcher durch den Schließringbolzen 37 mit einem Kopf 38 und einem Schließring 39 die Längsflansche 35 von zwei Sektionssegmenten 3 verbunden sind.

### Bezugszeichenliste

- 1: Turm
- 2: Turmsektion
- 3: Sektionssegment
31 Endabschnitt
32 Endabschnitt
33 Verbindungswinkel
34 Verbindungswinkel
35 Längsflansch
36 Verbindungsmittel
37 Schließringbolzen
38 Kopf
39 Schließring
- 4: Gondel
- 5: Rotorblatt
- 6: Turmfußsegment
61 Wandabschnitt
62 Flanschabschnitt

## Patentansprüche

1. Turm (1) einer Windenergieanlage, welcher in seiner vertikalen Achse eine Mehrzahl von Turmsektionen (2) mit einem polygonalen oder runden Querschnitt aufweist, wobei wenigstens zwei Turmsektionen (2) jeweils eine Mehrzahl von Sektionssegmenten (3) umfassen, die an ihren im Wesentlichen vertikal verlaufenden Längsseiten Längsflansche (35) aufweisen, die durch Verbindungselemente (36) miteinander verbunden sind, **dadurch gekennzeichnet, dass**
die Sektionssegmente (3) innenseitig an ihren oberen und unteren Endabschnitten (31, 32) Verbindungswinkel (33, 34) aufweisen, welche in ihrer Längserstreckung im Wesentlichen vertikal ausgerichtet sind.

2. Turm (1) nach Anspruch 1, **dadurch gekennzeichnet, dass**
der Turm (1) wenigstens drei Turmfußsegmente (6) aufweist, wobei jedes Turmfußsegment (6) mit wenigstens einem zugeordneten Sektionssegment (3) verbindbar ist und jedes Turmfußsegment (6) Verbindungswinkel (33) aufweist, welche in ihrer Längserstreckung mit beiden Schenkeln parallel zur vertikalen Turmachse ausgerichtet sind.

3. Turm (1) nach Anspruch 1 oder 2, **dadurch gekennzeichnet, dass**
die Verbindungswinkel (33, 34) an einem der Endabschnitte (31, 32) über den Rand des Sektionssegments (3) hinausragen.

4. Turm (1) nach einem der Ansprüche 1 bis 3, **dadurch gekennzeichnet, dass** die Verbindungswinkel (33, 34) einen eingeschlossenen Winkel von mehr als 90 Grad, bevorzugt von 120 bis 150 Grad, besonders bevorzugt von 135 Grad aufweisen.

5. Turm (1) nach einem der Ansprüche 1 bis 4, **dadurch gekennzeichnet, dass** die Verbindungswinkel (33, 34) eines Sektionssegments (3) nicht lösbar mit diesem verbunden sind.

6. Turm (1) nach einem der Ansprüche 1 bis 5, **dadurch gekennzeichnet, dass** die Verbindungselemente (36) als Schließringbolzen (37) oder als Schraubgarnituren ausgebildet sind.

7. Turm (1) nach einem der Ansprüche 1 bis 6, **dadurch gekennzeichnet, dass** übereinander angeordnete Sektionssegmente (3) sich an ihren Endabschnitten (31, 32) in einem schmalen, bohrungsfreien Randabschnitt derart überlappen, dass der untere Endabschnitt (32) des oberen Sektionssegments (3) den Randbereich des oberen Endabschnitts (31) des unteren Sektionssegments (3) überdeckt.

8. Turm (1) nach einem der Ansprüche 1 bis 6, **dadurch gekennzeichnet, dass** übereinander angeordnete Sektionssegmente (3) stirnseitig überlappungsfrei aneinander stoßen.

9. Verfahren zum Bau eines Turms (1) einer Windenergieanlage, welcher in seiner vertikalen Achse eine Mehrzahl von Turmsektionen (2) mit einem runden oder polygonalen Querschnitt umfasst, wobei jede Turmsektion (2) aus einer Mehrzahl von Sektionssegmenten (3) mit einem einer Gondel (4) abgewandten unteren Endabschnitt (32) und einem der Gondel (4) zugewandten oberen Endabschnitt (31) besteht, umfassend Längsflansche (35) an den Längsseiten der Sektionssegmente (3), welche durch Verbindungselemente (36) zu einer Turmsektion (2) verbunden werden,
**dadurch gekennzeichnet, dass**
jeweils zwei übereinander angeordnete Sektionssegmente (3) zusammengefügt werden, indem das obere Sektionssegment (3) in einem schmalen Überlappungsbereich über das untere Sektionssegment (3) gestülpt wird, so dass Verbindungswinkel (33) im oberen Endabschnitt (32) des unteren Sektionssegments (3) mit Verbindungswinkeln (34) im unteren Endabschnitt (32) des oberen Sektionssegments (3) derart positioniert werden, dass Durchgangsbohrungen in den freien Schenkeln der oberen Verbindungswinkel (33) und Durchgangsbohrungen in den freien Schenkeln der unteren Verbindungswinkel (34) im Wesentlichen deckungsgleich übereinander liegen und anschließend die Verbindungselemente (36) eingebracht und verpresst werden, um beide Sektionssegmente (3) miteinander zu verbinden.

10. Verfahren nach Anspruch 9, mit den weiteren, vorhergehenden Schritten, dass mehrere Turmfußsegmente (6) mit dem Fundament verbunden werden, wobei jedes Turmfußsegment (6) anschließend mit wenigstens einem zugeordneten Sektionssegment (3) verbunden wird.

11. Verfahren nach Anspruch 9 oder 10, **gekennzeichnet durch** die weiteren Schritte, dass die weiteren Sektionssegmente (3) einer weiteren Ebene zu einer weiteren Turmsektion (2) zusammengefügt werden, wobei in die voneinander beabstandeten, im Wesentlichen übereinander liegenden Bohrungen der benachbarten Längsflansche (35) an den Längsseiten der Sektionssegmente (3) Verbindungselemente (36) eingebracht werden.
